# EUROPÄISCHE PATENTANMELDUNG

(11) **EP 4 166 842 A1**
(43) Veröffentlichungstag der Anmeldung: **19.04.2023**
(21) Anmeldenummer: 21202479.8
(22) Anmeldetag: 13.10.2021
(51) Int. Cl.: F21S 41/20, F21S 41/29, F21S 41/50, F21S 41/55, F21S 45/00, F21S 45/50

(54) **REPARIERBARER FAHRZEUGSCHEINWERFER**

(71) Anmelder: ZKW Group GmbH, 3250 Wieselburg (AT)
(72) Erfinder: Gutmensch, Maximilian, 3254 Bergland (AT); Kaltenmesser, Lukas, 3652 Leiben (AT); Kieslinger, Dietmar, 2604 Theresienfeld (AT); Krenn, Irmgard, 3251 Purgstall (AT)
(74) Vertreter: Patentanwaltskanzlei Matschnig & Forsthuber OG

(57) **Zusammenfassung**

Reparierbarer Fahrzeugscheinwerfer (1), insbesondere Kraftfahrzeugscheinwerfer, umfassend ein Scheinwerfergehäuse (2) mit einem das Innere (2a) des Scheinwerfergehäuses (2) umschließenden Scheinwerfergehäuseöffnungsrand (2b), sowie zumindest eine lichtdurchlässige Abdeckscheibe (5) zum Verschließen des Scheinwerfergehäuses (2), wobei die Abdeckscheibe (5) aus Polycarbonat besteht und an ihrer von dem Scheinwerfergehäuse (2) abgewandten Außenseite (5') eine Hardcoating-Beschichtung (5a) aufweist, wobei der reparierbare Fahrzeugscheinwerfer (1) zudem ein mit der Abdeckscheibe (5) fest und dichtend verbundenes Adapterelement (6) aufweist, wobei das Adapterelement (6) eine zu dem Scheinwerfergehäuseöffnungsrand (2b) korrespondierende Kontur (6b) aufweist, sodass das Adapterelement (6) formschließend auf den Scheinwerfergehäuseöffnungsrand (2b) anbringbar ist, wodurch im angebrachten Zustand das Adapterelement (6) gemeinsam mit der Abdeckscheibe (5) das Scheinwerfergehäuse (2) verschließt, wobei das Adapterelement (6) dergestalt ausgebildet ist, dass der Scheinwerfergehäuserand (2b) in jedem Punkt zumindest 10 mm von der Abdeckscheibe (5) beabstandet ist, wobei zwischen dem Adapterelement (6) und dem Scheinwerfergehäuserand (2b) eine lösbare Abdichtung (7) vorgesehen ist, sodass das Adapterelement (6) mitsamt der Abdeckscheibe (5) von dem Scheinwerfergehäuserand (2b) durch Lösen der Abdichtung (7) gelöst werden kann, wobei an dem Adapterelement (6) zumindest ein lichtundurchlässiges Designelement (8, 8') angeordnet ist, das mit dem Adapterelement (6) fest verbunden ist und dazu eingerichtet ist, zumindest einen Teil des die Lichtaustrittsfläche (3') des zumindest einen Lichtmoduls (3) umgebenden Bereichs des Fahrzeugscheinwerfergehäuses (2) zu verdecken, wobei die Form und die Größe des zumindest einen Designelements (8, 8') dabei dergestalt gewählt ist, dass eine Projektion des Designelements (8, 8'), gesehen in Richtung der Fahrzeuglängsachse (x), auf die Abdeckscheibe (5) zumindest 10% der Fläche der Abdeckscheibe (5) erfasst.

## Beschreibung

Die Erfindung betrifft einen reparierbaren Fahrzeugscheinwerfer, insbesondere Kraftfahrzeugscheinwerfer, umfassend ein Scheinwerfergehäuse mit einem das Innere des Scheinwerfergehäuses umschließenden Scheinwerfergehäuseöffnungsrand, sowie zumindest eine lichtdurchlässige Abdeckscheibe zum Verschließen des Scheinwerfergehäuses, wobei die Abdeckscheibe aus Polycarbonat besteht und an ihrer von dem Scheinwerfergehäuse abgewandten Außenseite eine Hardcoating-Beschichtung aufweist.

Aus dem Stand der Technik sind unterschiedlichste Arten von Konstruktionen für Scheinwerfer bekannt geworden. Insbesondere Fahrzeugscheinwerfer in der Automobilindustrie müssen auch unter besonderes harten Umweltbedingungen zuverlässig funktionieren. Sie sind einem breiten Temperaturspektrum, mechanischen und chemischen Einflüssen als auch Änderungen von Luftfeuchtigkeit oder Druck ausgesetzt. Um zu vermeiden, dass Feuchtigkeit in Scheinwerfer eindringt und so beispielsweise die Abdeckscheibe innen beschlägt, werden Scheinwerfergehäuse oft durch die Abdeckscheibe völlig dicht verschlossen, und zwar so, dass die Abdeckscheibe später nicht mehr abgenommen werden kann. Die Verbindung der Abdeckscheibe mit dem Scheinwerfergehäuse ist dabei permanent, d.h. die Abdeckscheibe kann nicht zerstörungsfrei von dem Gehäuse abgenommen werden.

Bei den wenigen Scheinwerfern, bei denen die Abdeckscheibe hingegen abnehmbar gestaltet ist, stellt sich das Problem, dass die Abdeckscheibe bei der Abnahme aufgrund ihrer Sprödheit leicht brechen kann. Zudem besteht das Risiko, dass im Falle der Abnahme der Abdeckscheibe sichtbare Bereiche wie z.B. Designblendenelemente berührt werden und daran z.B. Fingerabdrücke später sichtbar sind.

Eine Aufgabe der Erfindung besteht daher darin, einen reparierbaren Fahrzeugscheinwerfer zu schaffen, der die genannten Nachteile überwindet.

Diese Aufgabe wird mit einem reparierbaren Fahrzeugscheinwerfer der eingangs genannten Art gelöst, indem dieser erfindungsgemäß ein mit der Abdeckscheibe fest und dichtend verbundenes Adapterelement aufweist, wobei das Adapterelement eine zu dem Scheinwerfergehäuseöffnungsrand korrespondierende Kontur aufweist, sodass das Adapterelement formschließend auf den Scheinwerfergehäuseöffnungsrand anbringbar ist, wodurch im angebrachten Zustand das Adapterelement gemeinsam mit der Abdeckscheibe das Scheinwerfergehäuse verschließt, wobei das Adapterelement dergestalt ausgebildet ist, dass der Scheinwerfergehäuserand in jedem Punkt zumindest 10 mm von der Abdeckscheibe beabstandet ist, wobei zwischen dem Adapterelement und dem Scheinwerfergehäuserand eine lösbare Abdichtung vorgesehen ist, sodass das Adapterelement mitsamt der Abdeckscheibe von dem Scheinwerfergehäuserand durch Lösen der Abdichtung gelöst werden kann, wobei an dem Adapterelement zumindest ein lichtundurchlässiges Designelement angeordnet ist, das mit dem Adapterelement fest verbunden ist und dazu eingerichtet ist, zumindest einen Teil des die Lichtaustrittsfläche des zumindest einen Lichtmoduls umgebenden Bereichs des Fahrzeugscheinwerfergehäuses zu verdecken, wobei die Form und die Größe des zumindest einen Designelements dabei dergestalt gewählt ist, dass eine Projektion des Designelements, gesehen in Richtung der Fahrzeuglängsachse, auf die Abdeckscheibe zumindest 10% der Fläche der Abdeckscheibe erfasst.

Auf diese Weise wird die abnehmbare Abdeckscheibe stabilisiert und sichergestellt, dass Designelemente während der Arbeit an Komponenten des Scheinwerfers nicht versehentlich berührt werden, da diese gemeinsam mit der Abdeckscheibe abgenommen werden. Das Designelement könnte sogar einstückig mit Adapterelement ausgebildet sein bzw. aus einem Guss stammen. Die Designelemente können nicht nur für das Fahrzeugscheinwerferdesign eingesetzt werden, sondern auch dazu genutzt werden, dahinter angeordnete Scheinwerferkomponenten, insbesondere mechanisch wirksame Elemente, zu verdecken. Auch entfällt durch den Einsatz des Adapterelements die Notwendigkeit, bei einer Scheinwerferreparatur diesen direkt an der Abdeckscheibe anzugreifen, wodurch die Hardcoating-Beschichtung zerkratzt werden könnte. Das Adapterelement dient daher als mechanische Angriffsfläche um eine für die Scheinwerferöffnung erforderliche Kraft auf den Scheinwerfer auszuüben.

Insbesondere kann vorgesehen sein, dass das zumindest eine Designelement an seiner Oberfläche eine metallische Beschichtung aufweist. Die Beschichtung kann z.B. aus Aluminium, rostfreiem Stahl, Silber, Gold oder Kupfer bestehen.

Weiters kann vorgesehen sein, dass die lösbare Abdichtung als eine einstückige Gummidichtung, insbesondere in Form einer Dichtungslippe, ausgebildet ist, wobei der Scheinwerfergehäuseöffnungsrand durch eine weitgehend ebene Konturfläche ausgebildet ist, sodass die Gummidichtung flächig auf dem Scheinwerfergehäuseöffnungsrand des Scheinwerfergehäuses aufliegt.

Insbesondere kann vorgesehen sein, dass die lösbare Abdichtung durch eine lösbare Klebeschicht ausgebildet ist, wobei als Kleber zur Ausbildung der lösbaren Klebeschicht ein chemisch oder durch Wärmezufuhr lösbarerer Klebstoff vorgesehen ist.

Weiters kann vorgesehen sein, dass der Klebstoff ein durch Wärmezufuhr lösbarer Klebstoff ist, wobei die Schmelztemperatur des Klebers zwischen 100°C und 150°C beträgt.

Insbesondere kann vorgesehen sein, dass der reparierbare Fahrzeugschweinwerfer weiters Klemmmittel aufweist, mit denen das Adapterelement an dem Fahrzeugscheinwerfergehäuse festgeklemmt ist.

Weiters kann vorgesehen sein, dass das Adapterelement aus Kunststoff, insbesondere aus Polypropylen PP oder Polybutylenterephthalat PBT besteht.

Insbesondere kann vorgesehen sein, dass das Adapterelement ein Spritzgussbauteil ist, das aus zwei Komponenten besteht, die aufeinandergeschichtet sind, wobei die zwei Komponenten unterschiedliche Elastizität aufweisen, wobei jene Komponente mit höherer Elastizität dem Scheinwerfergehäuse zugewandt ist und jene Komponente geringerer Elastizität der Abdeckscheibe zugewandt ist. Es kann hierfür z.B. TPE, also thermoplastische Weichkomponenten, bei dem Adapterelement eingesetzt werden.

Weiters kann vorgesehen sein, dass das Adapterelement mit der Abdeckscheibe verklebt ist.

Insbesondere kann vorgesehen sein, dass das Verkleben der Abdeckscheibe durch einen Silikonkleber, Polyurethankleber, oder silanmodifizierte Polymere gegeben ist.

Weiters kann vorgesehen sein, dass das Adapterelement und die Abdeckscheibe frei von daran oder darin angeordneten elektrischen Verbrauchern und elektrischen Leitungen sind.

Insbesondere kann vorgesehen sein, dass das zumindest eine Designelement aus einem anderen Material als das Adapterelement besteht, wobei vorzugsweise jedes Designelement im Adapterelement verschraubt ist.

Weiters kann vorgesehen sein, dass zwei oder mehr Designelemente vorgesehen sind, wobei die Form und die Größe der Designelemente dabei dergestalt gewählt ist, dass eine Projektion der Designelemente, gesehen in Richtung der Fahrzeuglängsachse, auf die Abdeckscheibe in Summe zumindest 20% der Fläche der Abdeckscheibe, vorzugsweise zumindest 30% der Fläche der Abdeckscheibe, erfasst.

Insbesondere kann vorgesehen sein, dass die Hardcoating-Beschichtung der Abdeckscheibe aus siliziummodifizierten UV-aushärtenden Material besteht.

Weiters kann vorgesehen sein, dass der Fahrzeugscheinwerfer zudem zumindest ein innerhalb des Scheinwerfergehäuses angeordnetes Lichtmodul zur Abstrahlung einer Lichtverteilung, wobei das Lichtmodul zumindest ein um eine horizontale Achse verschwenkbares optisch relevantes Bauteil umfasst, wobei durch Verschwenken des optisch relevanten Bauteils um die horizontale Achse die Leuchtweite des zumindest eine Lichtmoduls reguliert wird, wobei das zumindest eine Lichtmodul mit dem Scheinwerfergehäuse zerstörungsfrei lösbar verbunden ist, und wobei das zumindest eine Lichtmodul eine Lichtaustrittsfläche zur Abgabe der Lichtverteilung aufweist, und zumindest eine Verstellvorrichtung umfasst, die dazu eingerichtet ist, das optisch relevante Bauteil um die horizontale Achse zu verschwenken.

Das Adapterelement ist fest und dichtend mit der Abdeckscheibe verbunden. Es ist nicht von der Abdeckscheibe zerstörungsfrei lösbar.

Ein optisch relevantes Bauteil beeinflusst die Ausbreitung von Licht, das entweder durch das optisch relevante Bauteil selbst emittiert wird, oder auf dieses auftrifft, wobei das optisch relevante Bauteil mit diesem auftreffenden Licht wechselwirkt, sodass das Licht von dem optisch relevanten Bauteil beispielsweise reflektiert, umgelenkt, projiziert, teilweise oder vollständig abgeschattet oder absorbiert wird. Als optisch relevantes Bauteil wird beispielsweise eine Lichtquelle, beispielsweise eine LED und/oder eine Laserlichtquelle, eine Blende oder Blendenanordnungen, ein Reflektor, eine Linse, insbesondere eine Projektionslinse, ein Lichtleiter, eine Dickwandoptik, ein Prisma, ein optisches Gitter, ein Spiegel, ein als DMD-Chip ausgebildetes MEMS-Bauteil, und/oder ein ganzes Lichtmodule bzw. Baugruppen umfassend solche Komponenten, etc. angesehen. Es können auch einzelne oder eine Mehrzahl dieser genannten Komponenten das optisch relevante Bauteil ausbilden. Das optisch relevante Bauteil kann beispielsweise in einem Tragrahmen gehaltert sein und/oder mit Hilfe eines Einstellsystems einstellbar sein, wobei das Einstellsystem hierzu beispielsweise an dem optisch relevanten Bauteil oder dem Tragrahmen angreifen kann.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines Fahrzeugscheinwerfers gemäß dem Stand der Technik,
Figur 2 eine schematische Darstellung eines erfindungsgemäßen Fahrzeugscheinwerfers,
Figur 3 eine perspektivische Darstellung des Scheinwerfers nach Fig. 2 von schräg vorne inklusive darin angeordneter Designelemente,
Figur 4 eine perspektivische Darstellung des Scheinwerfers nach Fig. 3 in einem geöffneten Zustand ohne Abdeckscheibe und Designelemente,
Figur 5 eine Rückansicht einer Abdeckscheibe inkl. damit verbundenem Adapterelement sowie Designelementen, und
Figur 6 eine perspektivische Darstellung eines Fahrzeugscheinwerfergehäuses und eines an den Rand des Gehäuses formschließend anbringbaren Adapterelements.

In den folgenden Figuren bezeichnen - sofern nicht anders angegeben - gleiche Bezugszeichen gleiche Merkmale.

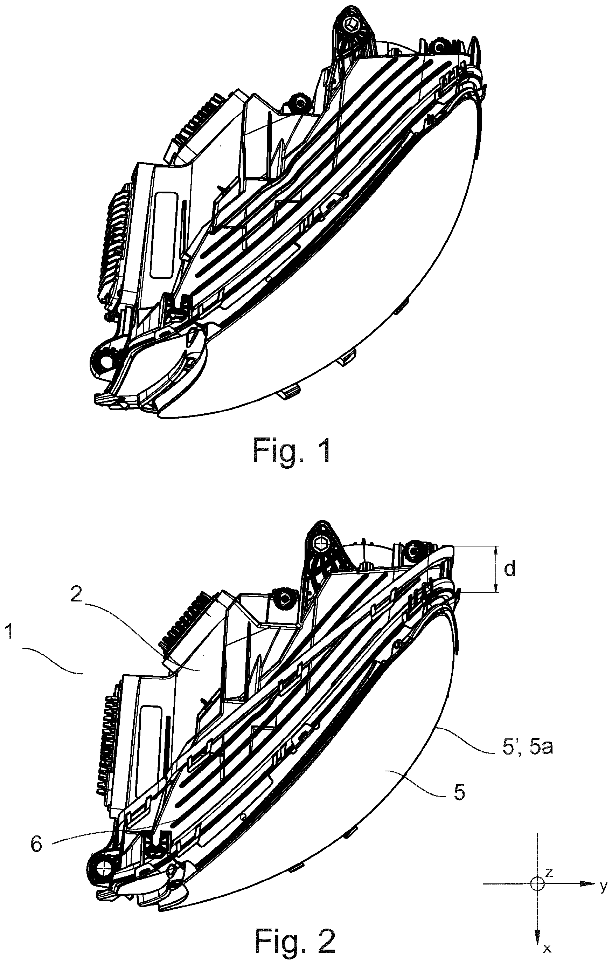

Figur 1 zeigt eine schematische Darstellung eines Fahrzeugscheinwerfers gemäß dem Stand der Technik. Dieser Scheinwerfer weist kein Adapterelement zwischen dem Scheinwerfergehäuse und der Abdeckscheibe auf. Die Abdeckscheibe ist dabei fest und unlösbar mit dem Gehäuse verbunden.

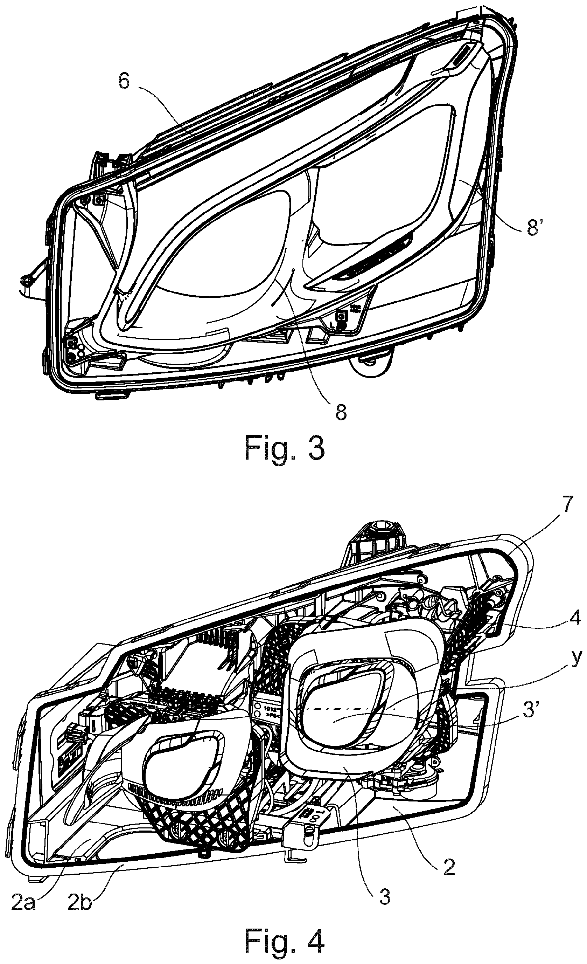

Figur 2 zeigt eine schematische Darstellung eines erfindungsgemäßen reparierbaren Fahrzeugscheinwerfers 1, der insbesondere als Kraftfahrzeugscheinwerfer ausgebildet ist. Der reparierbare Fahrzeugscheinwerfer 1 umfasst ein Scheinwerfergehäuse 2 mit einem das Innere 2a (siehe Fig. 4) des Scheinwerfergehäuses 2 umschließenden Scheinwerfergehäuseöffnungsrand 2b, sowie zumindest eine lichtdurchlässige Abdeckscheibe 5 zum Verschließen des Scheinwerfergehäuses 2. Die Abdeckscheibe 5 besteht Polycarbonat und weist an ihrer von dem Scheinwerfergehäuse 2 abgewandten Außenseite 5' eine Hardcoating-Beschichtung 5a auf. Die Hardcoating-Beschichtung 5a dient zum zusätzlichen Schutz der Abdeckscheibe vor den Auswirkungen von Umwelteinflüssen.

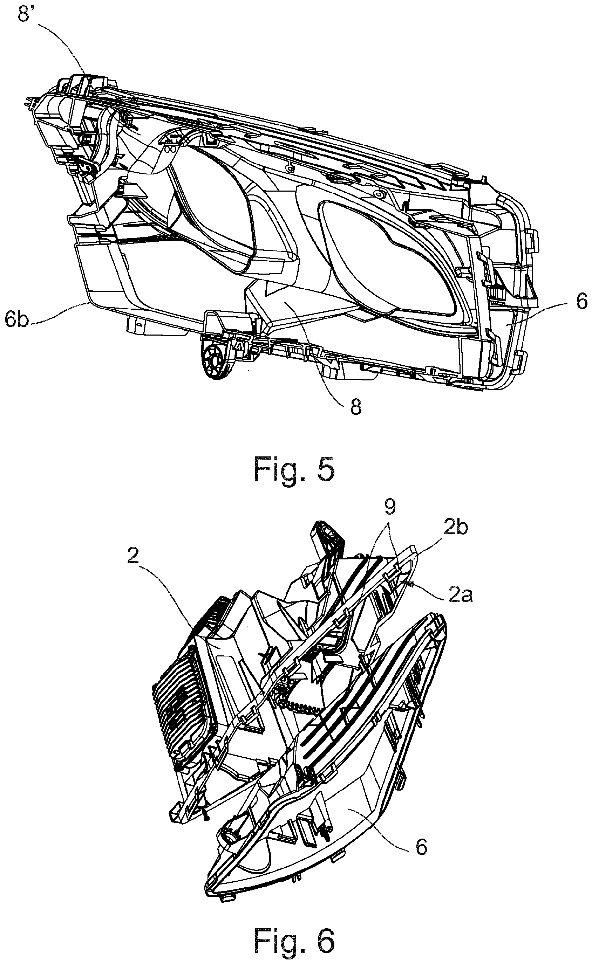

Der reparierbare Fahrzeugscheinwerfer 1 umfasst zudem ein mit der Abdeckscheibe 5 fest und dichtend verbundenes Adapterelement 6, wobei das Adapterelement 6 eine zu dem Scheinwerfergehäuseöffnungsrand 2b korrespondierende Kontur 6b (siehe Fig. 5) aufweist, sodass das Adapterelement 6 formschließend auf den Scheinwerfergehäuseöffnungsrand 2b anbringbar ist, wodurch im angebrachten Zustand das Adapterelement 6 gemeinsam mit der Abdeckscheibe 5 das Scheinwerfergehäuse 2 verschließt. Figur 2 zeigt den Scheinwerfer ein einem solcherart verschlossenen Zustand. Das Adapterelement 6 ist dergestalt ausgebildet, dass der Scheinwerfergehäuserand 2b in jedem Punkt zumindest 10 mm von der Abdeckscheibe 5 beabstandet ist. Dieser Abstand ist in Figur 2 mit dem Bezugszeichen d dargestellt.

Zwischen dem Adapterelement 6 und dem Scheinwerfergehäuserand 2b ist eine lösbare Abdichtung 7 (siehe Figur 4) vorgesehen, sodass das Adapterelement 6 mitsamt der Abdeckscheibe 5 von dem Scheinwerfergehäuserand 2b durch Lösen der Abdichtung 7 bzw. Lösen von der Abdichtung 7 gelöst werden kann. Insbesondere kann die lösbare Abdichtung 7 als eine einstückige Gummidichtung, insbesondere in Form einer Dichtungslippe, ausgebildet ist, wobei der Scheinwerfergehäuseöffnungsrand 2b durch eine weitgehend ebene Konturfläche ausgebildet ist, sodass die Gummidichtung flächig auf dem Scheinwerfergehäuseöffnungsrand 2b des Scheinwerfergehäuses 2 aufliegt.

Alternativ oder ergänzend dazu kann auch vorgesehen sein, dass die lösbare Abdichtung 7 durch eine lösbare Klebeschicht ausgebildet ist, wobei als Kleber zur Ausbildung der lösbaren Klebeschicht ein chemisch oder durch Wärmezufuhr lösbarerer Klebstoff vorgesehen ist. Es kann vorgesehen sein, dass Klebstoff ein durch Wärmezufuhr lösbarer Klebstoff ist, wobei die Schmelztemperatur des Klebers zwischen 100°C und 150°C beträgt.

In Figur 3 ist erkennbar, dass an dem Adapterelement 6 im vorliegenden Ausführungsbeispiel zwei lichtundurchlässiges Designelement 8 und 8' angeordnet sind. Natürlich kann die Anzahl dieser Designelemente beliebig variieren. Die Designelemente 8 und 8' sind mit dem Adapterelement 6 fest verbunden und dazu eingerichtet, zumindest einen Teil des die Lichtaustrittsfläche 3' (siehe Fig. 4) des zumindest einen Lichtmoduls 3 umgebenden Bereichs des Fahrzeugscheinwerfergehäuses 2 zu verdecken, wobei die Form und die Größe des der Designelemente 8 und 8' dabei dergestalt gewählt sind, dass ihre Projektion, gesehen in Richtung der Fahrzeuglängsachse x (siehe Fig. 2), auf die Abdeckscheibe 5 zumindest 10% der Fläche der Abdeckscheibe 5 erfasst. Die Fahrzeuglängsachse x ist natürlich bei der Entwicklung des Scheinwerfers vorbekannt, da seine Form so angepasst wird, dass die Hauptabstrahlrichtung mit der Richtung der Fahrzeuglängsachse x abgestimmt ist. Das bedeutet, dass ein Fahrzeugscheinwerfer für ein bestimmtes Fahrzeug auch für eine bestimmte Ausrichtung in diesem Fahrzeug im montierten Zustand konzipiert ist. Richtungsangaben mit Bezugnahme auf die Fahrzeuglängsachse x beziehen sich daher - sofern nicht anders angegeben - immer auf den fachgerecht im Fahrzeug montierten Zustand des Fahrzeugscheinwerfers.

Es kann vorgesehen sein, dass die Designelemente 8 bzw. 8' an ihrer Oberfläche eine metallische Beschichtung aufweisen.

Figur 6 zeigt eine perspektivische Darstellung eines Fahrzeugscheinwerfergehäuses 2 und eines an den Rand 2b des Gehäuses formschließend anbringbaren Adapterelements 6. Zur Befestigung des Adapterelements 6 an dem Gehäuse 2 kann vorgesehen sein, dass der reparierbare Fahrzeugschweinwerfer 1 weiters Klemmmittel 9 aufweist, mit denen das Adapterelement 6 an dem Fahrzeugscheinwerfergehäuse 2 festgeklemmt ist. Diese Klemmmittel sind in Figur 6 beispielhaft dargestellt und können grundsätzlich beliebig angeordnet sein, sofern ein Dichter Verschluss und eine möglichst einfache Bedienbarkeit und hohe Haltbarkeit sichergestellt wird.

Es kann vorgesehen sein, dass das Adapterelement 6 aus Kunststoff, insbesondere aus Polypropylen oder Polybutylenterephthalat besteht. Insbesondere kann vorgesehen sein, dass das Adapterelement 6 ein Spritzgussbauteil ist, das aus zwei Komponenten besteht, die aufeinandergeschichtet sind, wobei die zwei Komponenten unterschiedliche Elastizität aufweisen, wobei jene Komponente mit höherer Elastizität dem Scheinwerfergehäuse 2 zugewandt ist und jene Komponente geringerer Elastizität der Abdeckscheibe 5 zugewandt ist.

Weiters kann vorgesehen sein, dass das Adapterelement 6 mit der Abdeckscheibe 5 verklebt ist. Insbesondere kann das Verkleben der Abdeckscheibe 5 durch einen Silikonkleber, Polyurethankleber, oder silanmodifizierte Polymere gegeben sein.

Vorzugsweise kann vorgesehen sein, dass das Adapterelement 6 und die Abdeckscheibe 5 frei von daran oder darin angeordneten elektrischen Verbrauchern und elektrischen Leitungen sind. Auf diese Weise wird sichergestellt, dass keine elektrischen Verbindungen bei der Anbringung des Adapterelements 6 mitsamt der Abdeckscheibe 5 an das Gehäuse 2 geschlossen werden müssen. Die Dichtung 7 kann dadurch durchgängig und ohne Durchbrüche erfolgen. Weiters kann vorgesehen sein, dass die Designelemente 8 und 8' aus einem anderen Material als das Adapterelement 6 bestehen, wobei vorzugsweise jedes Designelement 8 und 8' im Adapterelement 6 verschraubt ist.

Im vorliegenden Ausführungsbeispiel sind zwei Designelemente 8 und 8' vorgesehen. Es kann vorgesehen sein, dass die Form und die Größe der Designelemente 8 bzw. 8'dergestalt gewählt ist, dass eine Projektion der Designelemente 8 bzw. 8', gesehen in Richtung der Fahrzeuglängsachse x, auf die Abdeckscheibe 5 in Summe zumindest 20% der Fläche der Abdeckscheibe 5, vorzugsweise zumindest 30% der Fläche der Abdeckscheibe 5, erfasst. Weiters kann vorgesehen sein, dass die Hardcoating-Beschichtung 5a der Abdeckscheibe 5 aus siliziummodifizierten UV-aushärtenden Material besteht.

Figur 4 zeigt eine perspektivische Darstellung des Scheinwerfers 1 nach Fig. 3 in einem geöffneten Zustand ohne Adapterelement 6, Abdeckscheibe 5 oder Designelemente 8 bzw. 8'. Der Fahrzeugscheinwerfer 1 umfasst darin zusätzlich zumindest ein innerhalb des Scheinwerfergehäuses 2 angeordnetes Lichtmodul 3 zur Abstrahlung einer Lichtverteilung, wobei das Lichtmodul 3 zumindest ein um eine horizontale Achse y verschwenkbares optisch relevantes Bauteil 3a, z.B. eine Linse, eine Blende, eine Lichtquelle oder eine gesamte optische Vorrichtung umfassend eine Kombination dieser Komponenten. Durch Verschwenken des optisch relevanten Bauteils 3a um die horizontale Achse y wird die Leuchtweite des zumindest eine Lichtmoduls 3 reguliert.

Das zumindest eine Lichtmodul 3 ist mit dem Scheinwerfergehäuse 2 zerstörungsfrei lösbar verbunden (z.B. verschraubt) und weist eine Lichtaustrittsfläche 3' zur Abgabe der Lichtverteilung auf. Weiters kann zumindest eine Verstellvorrichtung 4 vorgesehen sein, die dazu eingerichtet ist, das optisch relevante Bauteil 3a um die horizontale Achse y zu verschwenken.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Reparierbarer Fahrzeugscheinwerfer (1), insbesondere Kraftfahrzeugscheinwerfer, umfassend
- ein Scheinwerfergehäuse (2) mit einem das Innere (2a) des Scheinwerfergehäuses (2) umschließenden Scheinwerfergehäuseöffnungsrand (2b), sowie
- zumindest eine lichtdurchlässige Abdeckscheibe (5) zum Verschließen des Scheinwerfergehäuses (2), wobei die Abdeckscheibe (5) aus Polycarbonat besteht und an ihrer von dem Scheinwerfergehäuse (2) abgewandten Außenseite (5') eine Hardcoating-Beschichtung (5a) aufweist,
**dadurch gekennzeichnet, dass**
der reparierbare Fahrzeugscheinwerfer (1) zudem
- ein mit der Abdeckscheibe (5) fest und dichtend verbundenes Adapterelement (6) aufweist, wobei das Adapterelement (6) eine zu dem Scheinwerfergehäuseöffnungsrand (2b) korrespondierende Kontur (6b) aufweist, sodass das Adapterelement (6) formschließend auf den Scheinwerfergehäuseöffnungsrand (2b) anbringbar ist, wodurch im angebrachten Zustand das Adapterelement (6) gemeinsam mit der Abdeckscheibe (5) das Scheinwerfergehäuse (2) verschließt, wobei das Adapterelement (6) dergestalt ausgebildet ist, dass der Scheinwerfergehäuserand (2b) in jedem Punkt zumindest 10 mm von der Abdeckscheibe (5) beabstandet ist,
- wobei zwischen dem Adapterelement (6) und dem Scheinwerfergehäuserand (2b) eine lösbare Abdichtung (7) vorgesehen ist, sodass das Adapterelement (6) mitsamt der Abdeckscheibe (5) von dem Scheinwerfergehäuserand (2b) durch Lösen der Abdichtung (7) gelöst werden kann,
- wobei an dem Adapterelement (6) zumindest ein lichtundurchlässiges Designelement (8, 8') angeordnet ist, das mit dem Adapterelement (6) fest verbunden ist und dazu eingerichtet ist, zumindest einen Teil des die Lichtaustrittsfläche (3') des zumindest einen Lichtmoduls (3) umgebenden Bereichs des Fahrzeugscheinwerfergehäuses (2) zu verdecken, wobei die Form und die Größe des zumindest einen Designelements (8, 8') dabei dergestalt gewählt ist, dass eine Projektion des Designelements (8, 8'), gesehen in Richtung der Fahrzeuglängsachse (x), auf die Abdeckscheibe (5) zumindest 10% der Fläche der Abdeckscheibe (5) erfasst.

2. Reparierbarer Fahrzeugscheinwerfer (1) nach Anspruch 1, wobei das zumindest eine Designelement (8, 8') an seiner Oberfläche eine metallische Beschichtung aufweist.

3. Reparierbarer Fahrzeugscheinwerfer (1) nach Anspruch 1 oder 2, wobei die lösbare Abdichtung (7) als eine einstückige Gummidichtung, insbesondere in Form einer Dichtungslippe, ausgebildet ist, wobei der Scheinwerfergehäuseöffnungsrand (2b) durch eine weitgehend ebene Konturfläche ausgebildet ist, sodass die Gummidichtung flächig auf dem Scheinwerfergehäuseöffnungsrand (2b) des Scheinwerfergehäuses (2) aufliegt.

4. Reparierbarer Fahrzeugscheinwerfer (1) nach einem der vorhergehenden Ansprüche, wobei die lösbare Abdichtung (7) durch eine lösbare Klebeschicht ausgebildet ist, wobei als Kleber zur Ausbildung der lösbaren Klebeschicht ein chemisch oder durch Wärmezufuhr lösbarerer Klebstoff vorgesehen ist.

5. Reparierbarer Fahrzeugscheinwerfer (1) nach Anspruch 4, wobei der Klebstoff ein durch Wärmezufuhr lösbarer Klebstoff ist, wobei die Schmelztemperatur des Klebers zwischen 100°C und 150°C beträgt.

6. Reparierbarer Fahrzeugscheinwerfer (1) nach einem der vorhergehenden Ansprüche, wobei der reparierbare Fahrzeugschweinwerfer (1) weiters Klemmmittel (9) aufweist, mit denen das Adapterelement (6) an dem Fahrzeugscheinwerfergehäuse (2) festgeklemmt ist.

7. Reparierbarer Fahrzeugscheinwerfer (1) nach einem der vorhergehenden Ansprüche, wobei das Adapterelement (6) aus Kunststoff, insbesondere aus Polypropylen oder Polybutylenterephthalat besteht.

8. Reparierbarer Fahrzeugscheinwerfer (1) nach Anspruch 7, wobei das Adapterelement (6) ein Spritzgussbauteil ist, das aus zwei Komponenten besteht, die aufeinandergeschichtet sind, wobei die zwei Komponenten unterschiedliche Elastizität aufweisen, wobei jene Komponente mit höherer Elastizität dem Scheinwerfergehäuse (2) zugewandt ist und jene Komponente geringerer Elastizität der Abdeckscheibe (5) zugewandt ist.

9. Reparierbarer Fahrzeugscheinwerfer (1) nach einem der vorhergehenden Ansprüche, wobei das Adapterelement (6) mit der Abdeckscheibe (5) verklebt ist.

10. Reparierbarer Fahrzeugscheinwerfer (1) nach Anspruch 10, wobei das Verkleben der Abdeckscheibe (5) durch einen Silikonkleber, Polyurethankleber, oder silanmodifizierte Polymere gegeben ist.

11. Reparierbarer Fahrzeugscheinwerfer (1) nach einem der vorhergehenden Ansprüche, wobei das Adapterelement (6) und die Abdeckscheibe (5) frei von daran oder darin angeordneten elektrischen Verbrauchern und elektrischen Leitungen sind.

12. Reparierbarer Fahrzeugscheinwerfer (1) nach einem der vorhergehenden Ansprüche, wobei das zumindest eine Designelement (8, 8') aus einem anderen Material als das Adapterelement (6) besteht, wobei vorzugsweise jedes Designelement (8, 8') im Adapterelement (6) verschraubt ist.

13. Reparierbarer Fahrzeugscheinwerfer (1) nach einem der vorhergehenden Ansprüche, wobei zwei oder mehr Designelemente (8,8') vorgesehen sind, wobei die Form und die Größe der Designelemente (8, 8') dabei dergestalt gewählt ist, dass eine Projektion der Designelemente (8, 8'), gesehen in Richtung der Fahrzeuglängsachse (x), auf die Abdeckscheibe (5) in Summe zumindest 20% der Fläche der Abdeckscheibe (5), vorzugsweise zumindest 30% der Fläche der Abdeckscheibe (5), erfasst.

14. Reparierbarer Fahrzeugscheinwerfer (1) nach einem der vorhergehenden Ansprüche, wobei die Hardcoating-Beschichtung (5a) der Abdeckscheibe (5) aus siliziummodifizierten UV-aushärtenden Material besteht.

15. Reparierbarer Fahrzeugscheinwerfer (1) nach einem der vorhergehenden Ansprüche, wobei der Fahrzeugscheinwerfer (1) zudem folgendes umfasst:
- zumindest ein innerhalb des Scheinwerfergehäuses (2) angeordnetes Lichtmodul (3) zur Abstrahlung einer Lichtverteilung, wobei das Lichtmodul (3) zumindest ein um eine horizontale Achse (y) verschwenkbares optisch relevantes Bauteil (3a) umfasst, wobei durch Verschwenken des optisch relevanten Bauteils (3a) um die horizontale Achse (y) die Leuchtweite des zumindest eine Lichtmoduls (3) reguliert wird, wobei das zumindest eine Lichtmodul (3) mit dem Scheinwerfergehäuse (2) zerstörungsfrei lösbar verbunden ist, und wobei das zumindest eine Lichtmodul (3) eine Lichtaustrittsfläche (3') zur Abgabe der Lichtverteilung aufweist,
- zumindest eine Verstellvorrichtung (4), die dazu eingerichtet ist, das optisch relevante Bauteil (3a) um die horizontale Achse (y) zu verschwenken.
